# EUROPÄISCHE PATENTSCHRIFT

(11) **EP 3 336 384 B1**
(45) Veröffentlichungstag und Bekanntmachung des Hinweises auf die Patenterteilung: **10.04.2024**
(21) Anmeldenummer: 17207049.2
(22) Anmeldetag: 13.12.2017
(51) Int. Cl.: F16H 49/00

(54) **GETRIEBEVORRICHTUNG**
TRANSMISSION DEVICE
BOÎTE DE VITESSES

(30) Priorität: 13.12.2016 LU 93359
(43) Veröffentlichungstag der Anmeldung: 20.06.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 0 741 067
- DE-A1- 10 222 696
- DE-A1-102008 013 147

## Beschreibung

Die Erfindung betrifft eine Getriebevorrichtung, die ein Spannungswellengetriebe, das einen Circularspline und einen Flexspline beinhaltet, sowie ein das Spannungswellengetriebe an dem Circularspline haltendes Halteelement aufweist.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird. Der Circularspline und der Flexspline weisen eine unterschiedliche Zahl von Zähnen auf. Der Flexspline kann in Form eines Flextopfs ausgebildet sein. Innerhalb des Flexsplines ist ein zumeist elliptischer Wellengenerator mittels eines radialflexiblen Wälzlagers rotierbar angeordnet. Der Wellengenerator verformt den Flexspline zu einer elliptischen Form und bringt so die Außenverzahnung des Flexsplines mit der Innenverzahnung des Circularsplines an jedem Ende der Ellipsen-Hauptachse miteinander in Eingriff.

Die meisten Getriebevorrichtungen, die ein Spannungswellengetriebe beinhalten, weisen zumeist einen Circularspline auf, der flanschartig ausgebildet ist und Durchgänge für Befestigungsschrauben hat, um den Circularspline befestigen zu können. Beispielsweise offenbart DE 10 2009 000 486 A1 ein Spannungswellengetriebe mit einem solchen Circularspline.

Auch aus DE 102 15 569 A1 ist ein Spannungswellengetriebe mit einem solchen Circularspline, der einen Befestigungsflansch mit Durchgängen für Befestigungsschrauben aufweist, bekannt. Der Circularspline ist aus mehreren Teilen, die stoffschlüssig miteinander verbunden sind, zusammengesetzt.

DE 102 22 696 A1 offenbart ein Spannungswellengetriebe mit einem Circularspline, der einen Befestigungsflansch mit Fixieröffnungen aufweist. Um ein geringes Gewicht zu erzielen, ist der Circularspline zweiteilig aufgebaut und besteht einerseits aus einem Zahnrad-Hauptelement, das aus einem leichten Metall gefertigt ist und das die Fixieröffnungen zum Befestigen des Circularsplines an anderen Bauteilen aufweist, und andererseits aus einem die Verzahnung bildenden dünnen Ring auf Eisenbasis. Der dünne Ring mit der Verzahnung ist in integraler Weise, beispielsweise durch einen Schmiedevorgang oder mittels Klebstoff, an einem Innenumfangsrand des Zahnrad-Hauptelements vereinigt.

Aus DE 10 2008 013 147 A1 ist ein Verfahren zum Schmieren eines Wellreduktionsgetriebes für Hochgeschwindigkeitsrotation bekannt, bei dem Öl von außen durch einen Ölzuführungskanal in das Wellreduktionsgetriebe gepumpt wird und anschließend durch einen Ölrückgewinnungskanal wieder abgesaugt wird. Das Wellreduktionsgetriebe weist insoweit eine Umlaufschmierung (Schmierstoffkreislauf) mit Öl auf.

Es ist die Aufgabe der vorliegenden Erfindung, eine Getriebevorrichtung anzugeben, die bei einfacher Realisierbarkeit radial besonders bauraumsparend aufgebaut sein kann.

Die Aufgabe wird durch eine Getriebevorrichtung gelöst, die dadurch gekennzeichnet ist, dass das Halteelement den Circularspline, insbesondere wenigstens in Tangentialrichtung, ausschließlich kraftschlüssig an einer Außenumfangsfläche des Circularsplines hält und dass die Außenumfangsfläche des Circularsplines eine axiale Länge aufweist, die größer ist als das 0,2-Fache des Teilkreisdurchmessers einer Außenverzahnung des Flexsplines.

Die Erfindung hat den besonderen Vorteil, dass durch eine ausschließlich kraftschlüssige Befestigung des Circularsplines radial Bauraum eingespart werden kann, weil auf eine flanschartige Ausbildung des Circularsplines und das Vorsehen von Schraubverbindungen zum Befestigen des Circularsplines verzichtet werden kann, wobei gleichzeitig durch die besondere axiale Länge der Außenumfangsfläche des Circularsplines eine kraftschlüssige Befestigung ermöglicht ist, die auch beim Übertragen von hohen Drehmomenten und insbesondere beim Übertragen der für das jeweilige Spannungswellengetriebe maximal zulässigen Drehmomente zuverlässig hält.

Die Verwendung eines Circularsplines mit einer axial kürzeren Außenumfangsfläche hätte den Nachteil, dass der lokal aufgrund der zur kraftschlüssigen Befestigung des Circularsplines erforderlichen Klemmkräfte wirkende Druck den Circularspline verformen könnte, was Zahneingriffsstörungen oder im schlimmsten Fall ein Versagen des Spannungswellengetriebes zur Folge hätte.

Bei Ausführungen, die eine ganz besonders hohe Sicherheitsreserve benötigen kann vorteilhaft vorgesehen sein, dass die Außenumfangsfläche des Circularsplines eine axiale Länge aufweist, die größer ist als das 0,3-Fache, insbesondere größer als das 0,5-Fache, des Teilkreisdurchmessers einer Außenverzahnung des Flexsplines ist.

Insbesondere kann die axiale Länge vorteilhaft im Bereich des 0,2-fachen bis 0,3-fachen des Teilkreisdurchmessers der Außenverzahnung des Flexsplines liegen. Es hat sich gezeigt, dass eine axiale Länge des Circularsplines, die das 0,25-fache des Teilkreisdurchmessers der Außenverzahnung des Flexsplines ist, besonders vorteilhaft, insbesondere mit Komponenten aus Stahl, realisierbar ist im Hinblick auf die radiale Bauraumbeanspruchung und im Hinblick auf ein möglichst hohes übertragbares Drehmoment.

Bei einer besonderen Ausführung ist zwischen dem Halteelement und dem Circularspline ein Klemmbauteil angeordnet. Das Klemmbauteil kann beispielsweise als gewelltes und/oder elastisches und/oder zylinderförmig gebogenes Band, insbesondere Blechband, ausgebildet sein. Es ist alternativ oder zusätzlich auch möglich, dass das Klemmbauteil als geschlitzter Ring ausgebildet ist. Das Klemmbauteil kann vorteilhaft aus einem Metall hergestellt sein oder ein Metall beinhalten. Insbesondere kann das Klemmbauteil aus Stahl oder aus Federstahl hergestellt sein.

Der Circularspline ist, insbesondere radial, starr ausgebildet. Insbesondere ist der Circularspline vorzugsweise alleine und ohne eine radiale Abstützung durch andere Bauteile, insbesondere ohne eine radiale Abstützung durch das Halteelement oder ein Klemmbauteil, für eine Funktion des Spannungswellengetriebes, insbesondere bei einer vorgesehen Maximalbelastung, radial ausreichend starr ausgebildet. Insbesondere ist der Circularspline vorzugsweise alleine und ohne eine radiale Abstützung durch andere Bauteile für eine Funktion des Spannungswellengetriebes radial derart starr ausgebildet, dass Funktionsstörungen, insbesondere Zahneingriffsstörungen, auch bei einer vorgesehen Maximalbelastung des Spannungswellengetriebes vermieden sind. Hierzu kann insbesondere vorteilhaft vorgesehen sein, dass der Circularspline einen radialen Abstand von dem Fußkreis der Innenverzahnung zur Außenumfangsfläche aufweist, der größer ist als der zehnte Teil, insbesondere der siebente Teil oder der fünfte Teil, des Teilkreisdurchmessers. Dies insbesondere wenn der Circularspline aus Stahl gefertigt ist. Alternativ oder zusätzlich kann vorgesehen sein, dass der Circularspline einen radialen Abstand von dem Fußkreis der Innenverzahnung zur Außenumfangsfläche aufweist, der größer als die Hälfte der axialen Verzahnungslänge, insbesondere größer als 2/3 der axialen Verzahnungslänge, insbesondere größer als die axiale Verzahnungslänge ist. Dies insbesondere wenn der Circularspline aus Stahl gefertigt ist.

Vorzugsweise ist die Außenumfangsfläche des Circularsplines wenigstens teilweise, insbesondere vollständig, zylinderförmig, insbesondere kreiszylinderförmig, ausgebildet. Eine solche Ausführung ist besonders einfach herstellbar. Insbesondere kann vorteilhaft vorgesehen sein, dass die Außenumfangsfläche des Circularsplines frei von Vorsprüngen und Vertiefungen ist. Insbesondere kann vorteilhaft vorgesehen sein, dass die Außenumfangsfläche des Circularsplines wenigstens in Tangentialrichtung frei von Vorsprüngen und Vertiefungen ist.

Alternativ oder zusätzlich kann auch vorgesehen sein, dass das Klemmbauteil zylinderförmig ausgebildet ist.

Außer einer kraftschlüssigen Ankopplung des Circularsplines an das Halteelement mittels des Klemmbauteils kann eine weitere kraftschlüssige Ankopplung vorhanden sein. Diese kann beispielsweise ein weiteres Klemmbauteil beinhalten.

Bei einer ganz besonders vorteilhaften Ausführung ist die kraftschlüssige Ankopplung des Circularsplines an das Halteelement derart ausgebildet, dass sie durchrutscht, bevor ein Bauteil des Spannungswellengetriebes beschädigt wird. Auf diese Weise wird vorteilhaft eine Beschädigung des Spannungswellengetriebes bei Belastungsspitzen wirkungsvoll vermieden. Derartige Belastungsspitzen können bei einem Roboterarm insbesondere dann auftreten, wenn ein Träger des Roboterarms relativ zu einem über die Getriebevorrichtung triebtechnisch verbundenen weiteren Träger des Roboterarms abrupt abgebremst wird oder wenn eine Bewegung des Roboterarms durch Anschlagen an ein Hindernis unterbrochen wird. Auch eine Beschädigung der übrigen Teile des Roboterarms kann so vermieden werden.

Der Circularspline kann vorteilhaft aus einem Metall hergestellt sein oder ein Metall beinhalten. Der Circularspline kann insbesondere aus Stahl hergestellt sein. Auch das Halteelement kann vorteilhaft aus einem Metall hergestellt sein oder ein Metall beinhalten. Das Halteelement kann vorteilhaft insbesondere aus Stahl hergestellt sein.

Besonders vorteilhaft ist eine Ausführung, bei der der Flexspline als Flextopf ausgebildet ist. Insbesondere kann vorteilhaft vorgesehen sein, dass der Flexspline als Flextopf ausgebildet ist, wobei der Flextopfboden einen Befestigungsflansch aufweist oder als Befestigungsflansch ausgebildet ist. Auf diese Weise ist vorteilhaft erreicht, dass weitere drehmomentübertragende Bauteile einfach angekoppelt werden können.

Bei einer ganz besonders vorteilhaften Ausführung weist der Circularspline eine Innenverzahnung und wenigstens einen axial über die Innenverzahnung hervorstehenden Teil auf. Eine solche Ausführung hat insbesondere den Vorteil, dass zwischen dem axial über die Innenverzahnung hervorstehenden Teil und der Außenseite der Flextopfwandung ein Schmiermittelreservoir ausgebildet sein kann.

Das Verhältnis der axialen Länge des axial über die Innenverzahnung hinausragenden Teils des Circularsplines zu der axialen Länge der Flextopfwandung vom Flextopfboden bis zur Außenverzahnung kann vorteilhaft im Bereich von 1/10 bis 8/10 liegen. Alternativ oder zusätzlich ist es vorteilhaft auch möglich, dass das Verhältnis der axialen Länge des axial über den Bereich des Ineingriffs von Innenverzahnung und Außenverzahnung hinausragenden Teils des Circularsplines zu der axialen Länge der Flextopfwandung vom Flextopfboden bis zum Bereich des Ineingriffs von Innenverzahnung und Außenverzahnung im Bereich von 1/10 bis 8/10 liegt.

Besonders vorteilhaft ist eine Ausführung, bei der das Verhältnis der axialen Länge des axial hinausragenden Teils des Circularsplines zu der axialen Länge der Flextopfwandung vom Flextopfboden bis zur Außenverzahnung im Bereich von 2/10 bis 6/10 oder im Bereich von 3/10 bis 5/10 oder bei 4/10 liegt, wenn die Untersetzung des Spannungswellengetriebes i=80 beträgt.

Ebenfalls besonders vorteilhaft ist eine Ausführung, bei der das Verhältnis der axialen Länge des axial hinausragenden Teils des Circularsplines zu der axialen Länge der Flextopfwandung vom Flextopfboden bis zur Außenverzahnung im Bereich von 1/16 bis 10/16 oder im Bereich von 1/8 bis 3/8 oder bei 2/8 liegt, wenn die Untersetzung des Spannungswellengetriebes i=120 beträgt.

Das Spannungswellengetriebe kann beispielsweise derart ausgebildet sein, dass ein Wellengenerator des Spannungswellengetriebes als Antrieb fungiert und der Flexspline als Abtrieb fungiert.

Die Zähneanzahl der Außenverzahnung des erfindungsgemäßen Spannungswellengetriebes kann vorteilhaft im Bereich zwischen 152 und 168 oder im Bereich von 232 bis 248 Zähnen liegen. Insbesondere kann die Zähneanzahl der Außenverzahnung des erfindungsgemäßen Spannungswellengetriebes genau 160 Zähne oder genau 240 Zähne betragen. insbesondere kann vorteilhaft vorgesehen sein, dass die Innenverzahnung genau zwei Zähne mehr aufweist, als die Außenverzahnung.

Im Hinblick auf eine bauraumsparende Ausführung, die sich insbesondere zur Verwendung in einem motorisierten Gelenk eines Roboters besonders gut eignet, kann die Außenverzahnung vorteilhaft einen Teilkreisdurchmesser im Bereich von 50 mm bis 53 mm oder im Bereich von 50,5 mm bis 51,5 mm oder von 51,0 mm bis 51,5 mm aufweisen. Analog oder zusätzlich kann vorteilhaft vorgesehen sein, dass die Innenverzahnung einen Teilkreisdurchmesser im Bereich von 50 mm bis 53 mm oder im Bereich von 51,8 mm bis 52,3 mm aufweist.

Besonders vorteilhaft ist eine Ausführung, bei der der Teilkreisdurchmesser 51,2 mm beträgt, wenn die Untersetzung des Spannungswellengetriebes i=80 beträgt. Ebenfalls besonders vorteilhaft ist eine Ausführung, bei der der Teilkreisdurchmesser 51,4 mm beträgt, wenn die Untersetzung des Spannungswellengetriebes i=120 beträgt.

Die Deflektion kann vorteilhaft im Bereich von 0,3 mm bis 0,9 mm oder im Bereich von 0,4 mm bis 0,8 mm liegen. Vorteilhaft kann die Deflektion alternativ oder zusätzlich im Bereich von 0,5 % bis 1,5% des Teilkreisdurchmessers der Außenverzahnung des Flextopfes liegen.

Bei einer Untersetzung des Spannungswellengetriebes von i=80 kann die Deflektion vorteilhaft im Bereich von 0,6 mm bis 0,9 mm, insbesondere im Bereich von 0,7 mm bis 0,8 mm, liegen. Insbesondere kann die Deflektion Bei einer Untersetzung des Spannungswellengetriebes von i=80 0,73 mm betragen.

Bei einer Untersetzung des Spannungswellengetriebes von i=120 kann die Deflektion vorteilhaft im Bereich von 0,3 mm bis 0,7 mm, insbesondere im Bereich von 0,4 mm bis 0,6 mm, liegen. insbesondere kann die Deflektion Bei einer Untersetzung des Spannungswellengetriebes von i=120 0,5 mm betragen.

Die Außenverzahnung und/oder die Innenverzahnung können vorteilhaft, eine axiale Länge im Bereich von 7 mm bis 10 mm oder im Bereich von 8 mm bis 9 mm aufweisen. Besonders vorteilhaft ist eine Ausführung, bei der die Außenverzahnung und/oder die Innenverzahnung eine axiale Länge von 8 mm aufweist, wenn die Untersetzung des Spannungswellengetriebes i=80 beträgt. Ebenfalls besonders vorteilhaft ist eine Ausführung, bei der die Außenverzahnung und/oder die Innenverzahnung eine axiale Länge von 9 mm aufweist, wenn die Untersetzung des Spannungswellengetriebes i=120 beträgt.

Vorzugsweise ist außer der Außenumfangsfläche keine weitere Fläche zum kraftschlüssigen Anbinden des Circularsplines an das Halteelement oder ein anders Bauteil der Getriebevorrichtung vorhanden. Insbesondere kann vorteilhaft vorgesehen sein, dass das Halteelement den Circularspline ausschließlich an der Außenumfangsfläche des Circularsplines hält.

Bei einer ganz besonders robusten Ausführung ist der Circularspline einstückig aus einem einzigen Stück Rohmaterial hergestellt. Insbesondere im Hinblick auf eine kostengünstige Herstellung eine langlebige Ausführung kann vorteilhaft vorgesehen sein, dass der Circularspline nicht aus mehreren Teilen zusammengesetzt wird. Dies vorzugsweise insbesondere nicht in der Weise, dass mehrere Teile nachträglich aufwendig kraft, form- oder stoffschlüssig miteinander verbunden werden müssen.

Von besonderem Vorteil ist ein motorisiertes Gelenk zum Verbinden von zwei relativ zueinander beweglichen Trägern eines programmierbaren Bewegungsautomaten, das einen Antriebsmotor und eine erfindungsgemäße, dem Antriebsmotor triebtechnisch nachgeschaltete Getriebevorrichtung aufweist.

Bei einer besonderen Ausführung weist das Gelenk zwei relativ zueinander bewegliche Gehäuseteile auf, wobei das Halteelement unbeweglich mit einem der Gehäuseteile verbunden ist oder Bestandteil eines der Gehäuseteile ist.

Bei einer besonderen Ausführung ist das Gelenk dazu ausgebildet, zwei Träger derart zu verbinden, dass die Ebene, in der sich einer der Träger bewegt, und die Ebene, in der sich der andere Träger bewegt, stets parallel zueinander angeordnet sind. Bei einer anderen Ausführung ist das Gelenk dazu ausgebildet, zwei Träger derart zu verbinden, dass die Ebene, in der sich einer der Träger bewegt, und die Ebene, in der sich der andere Träger bewegt, stets senkrecht zueinander angeordnet sind. Die Träger können beispielsweise Bestandteile eines Roboterarms sein.

Von besonderem Vorteil, insbesondere im Hinblick auf eine besonders kompakte Ausbildung, ist ein programmierbarer Bewegungsautomat, der wenigstens eine erfindungsgemäße Getriebevorrichtung beinhaltet.

Der programmierbare Bewegungsautomat kann insbesondere wenigstens ein motorisiertes Gelenk aufweisen, das eine erfindungsgemäße Getriebevorrichtung beinhaltet. Von besonderem Vorteil ist ein programmierbarer Bewegungsautomat mit zwei Trägern, die mittels eines erfindungsgemäßen, motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an das Abtriebselement des Spannungswellengetriebes angekoppelt ist. Die zwei mittels des motorisierten Gelenks beweglich verbundenen Träger können beispielsweise Teile eines Roboterarmes sein.

Insbesondere kann vorteilhaft vorgesehen sein, dass einer der Träger direkt oder indirekt drehfest mit dem Halteelement verbunden ist oder das Halteelement bildet.

Bei einer besonderen Ausführung weist das Gelenk zwei relativ zueinander bewegliche Gehäuseteile auf, wobei das Halteelement unbeweglich mit einem der Gehäuseteile verbunden ist oder Bestandteil eines der Gehäuseteile ist.

Der programmierbare Bewegungsautomat kann insbesondere ein Industrieroboter sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Getriebevorrichtung,
- Fig.2: ein zweites Ausführungsbeispiel einer erfindungsgemäßen Getriebevorrichtung,
- Fig.3: ein drittes Ausführungsbeispiel einer erfindungsgemäßen Getriebevorrichtung,
- Fig.4: ein viertes Ausführungsbeispiel einer erfindungsgemäßen Getriebevorrichtung, und
- Fig.5: ein fünftes Ausführungsbeispiel einer erfindungsgemäßen Getriebevorrichtung.

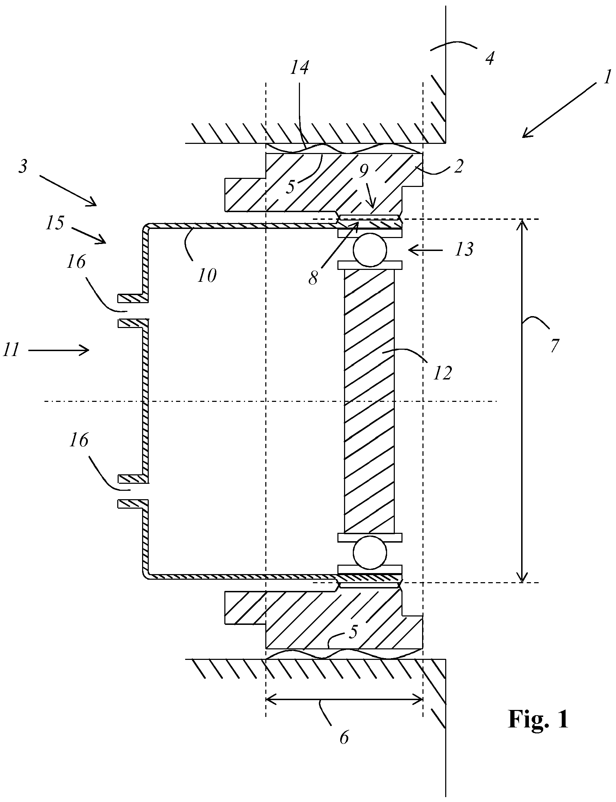

Fig. 1 zeigt ein erstes Ausführungsbeispiel einer erfindungsgemäßen Getriebevorrichtung. Die Getriebevorrichtung beinhaltet ein Spannungswellengetriebe 1, das einen Circularspline 2 mit einer Innenverzahnung 9 und einen Flexspline 3 mit einer Außenverzahnung 8 aufweist. Die Innenverzahnung 9 des Circularsplines 2 steht mit der Außenverzahnung 8 des als Flextopf 15 ausgebildeten Flexsplines 3 in Zahneingriff.

Der Flextopf 3 weist eine Flextopfwandung 10 und einen Flextopfboden 11 auf. Innerhalb des Flextopfes 15 ist ein elliptischer Wellengenerator 12 mittels eines radialflexiblen Wälzlagers 13 rotierbar angeordnet. Der Wellengenerator 12 verformt das dem Flextopfboden 11 axial gegenüberliegende Ende des Flextopfes 15 zu einer elliptischen Form und bringt so die Außenverzahnung 8 des Flextopfes 15 mit der Innenverzahnung 2 des Circularsplines 2 an jedem Ende der Ellipsen-Hauptachse miteinander in Eingriff.

Die Getriebevorrichtung beinhaltet außerdem ein Halteelement 4, das das Spannungswellengetriebe 1 an dem Circularspline 2 haltert. Das Halteelement 4 hält den Circularspline 2 ausschließlich kraftschlüssig an einer Außenumfangsfläche 5 des Circularsplines 2, wobei die Außenumfangsfläche 5 des Circularsplines 2 eine axiale Länge 6 aufweist, die größer ist als das 0,2-fache des Teilkreisdurchmessers 7 der Außenverzahnung 8 des Flexsplines 3. Die axiale Länge 6 kann insbesondere das 0,25-fache des Teilkreisdurchmessers 7 der Außenverzahnung 8 des Flexsplines 3 sein.

Zwischen dem Halteelement 4 und dem Circularspline 2 ist ein Klemmbauteil 14 angeordnet. Das Klemmbauteil 14 ist als zylinderförmiges, gewelltes Band, vorzugsweise aus Federstahl, ausgebildet.

Der Wellengenerator 12 fungiert als Antrieb des Spannungswellengetriebes 1, während der Flextopf 15 als Abtrieb des Spannungswellengetriebes 1 fungiert. Der Flextopfboden 11 ist als Befestigungsflansch mit Durchgängen 16 für Befestigungsschrauben ausgebildet.

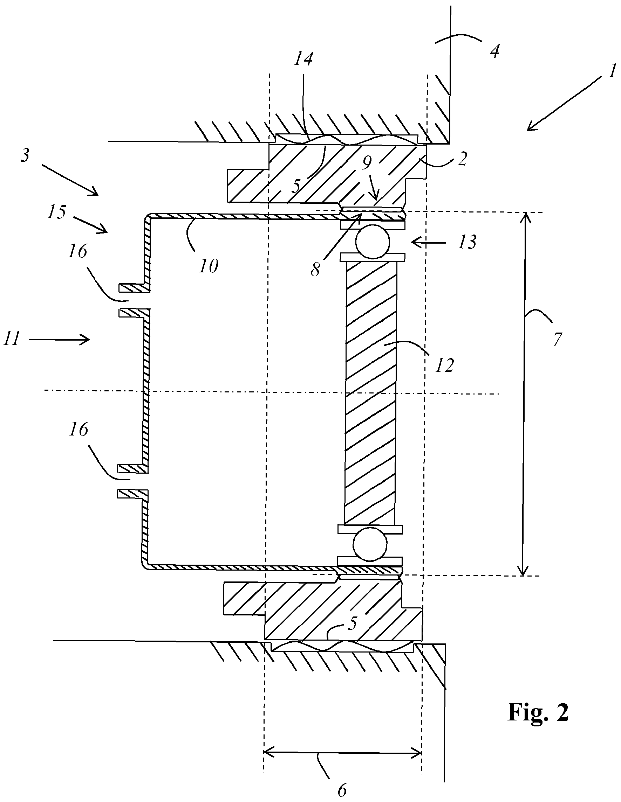

Fig. 2 zeigt ein zweites Ausführungsbeispiel einer erfindungsgemäßen Getriebevorrichtung. Die Getriebevorrichtung ist im Wesentlichen identisch aufgebaut, wie die in Figur 1 dargestellte Getriebevorrichtung. Im Unterscheid zu der in Figur 1 dargestellten Getriebevorrichtung weist das Halteelement 4 eine umlaufende Nut auf, in der das Klemmbauteil 14 angeordnet ist. Zusätzlich stehen auch die axial an die Nut angrenzenden Bereiche des Halteelements 4 mit der Außenumfangsfläche 5 des Circularsplines 2 in kraftschlüssiger Verbindung. Einer der axial an die Nut angrenzenden Bereiche des Halteelements 4 kann als Zentrierfläche ausgebildet sein, die einen vorgegebenen Zentrierdurchmesser aufweist.

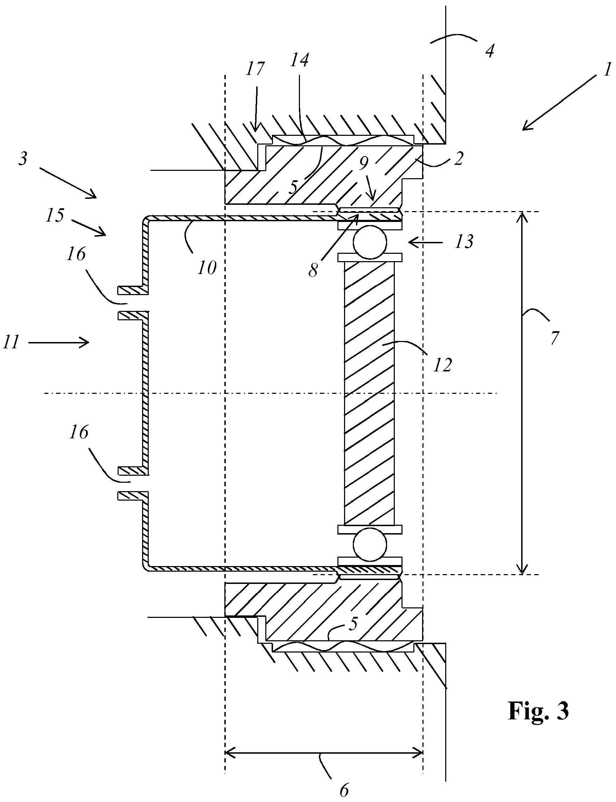

Fig. 3 zeigt ein drittes Ausführungsbeispiel einer erfindungsgemäßen Getriebevorrichtung. Die Getriebevorrichtung unterscheidet sich von der in Figur 2 dargestellten Ausführung dadurch, dass ein axial an die Nut für das Klemmbauteil 14 angrenzender Bereich 17 des Halteelements 4 gestuft ausgebildet ist und mit einem gestuften Abschnitt es Circularsplines 2 in kraftschlüssiger Verbindung steht. Einer der axial an die Nut angrenzenden Bereiche des Halteelements 4, insbesondere auch der im Durchmesser kleinere Abschnitt, kann als Zentrierfläche ausgebildet sein, die einen vorgegebenen Zentrierdurchmesser aufweist.

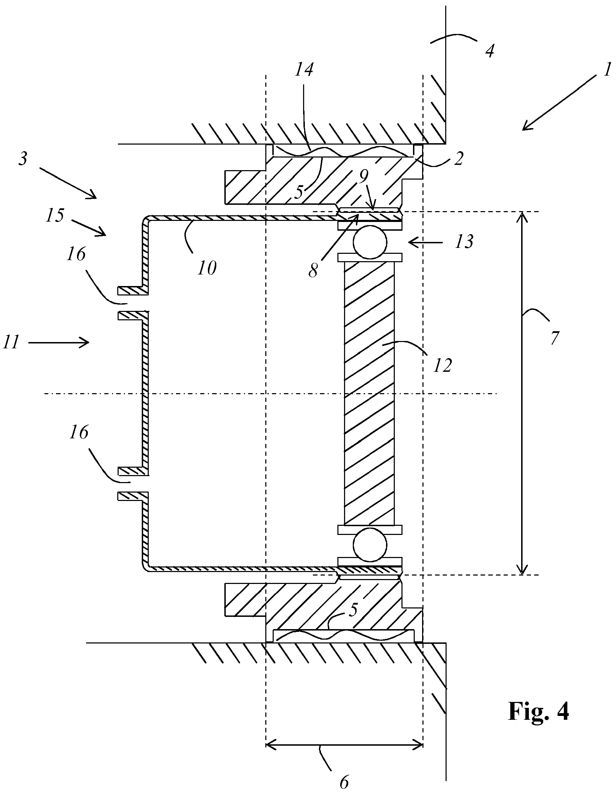

Fig. 4 zeigt ein viertes Ausführungsbeispiel einer erfindungsgemäßen Getriebevorrichtung. Die Getriebevorrichtung unterscheidet sich von der in Figur 2 dargestellten Ausführung dadurch, dass nicht das Halteelement 4, sondern der Circularspline 2 eine umlaufende Nut aufweist, in der das Klemmbauteil 14 angeordnet ist. Die axial an die Nut angrenzenden Bereiche des Circularsplines 2 gehören zu der Außenumfangsfläche 5, die in kraftschlüssiger Verbindung mit dem Halteelement 4 steht.

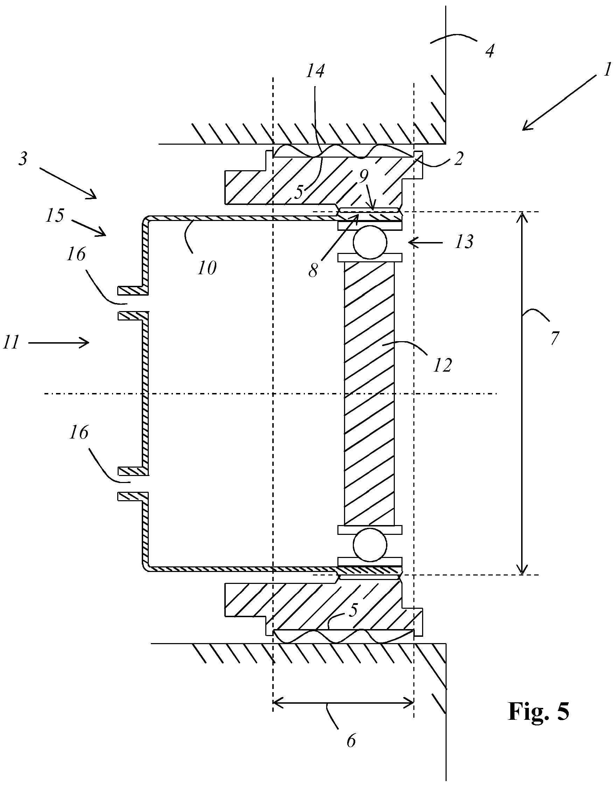

Fig. 5 zeigt ein fünftes Ausführungsbeispiel einer erfindungsgemäßen Getriebevorrichtung. Die Getriebevorrichtung unterscheidet sich von der in Figur 2 dargestellten Ausführung dadurch, dass die axial an die Nut angrenzenden Bereiche des Circularsplines 2 nicht zu der Außenumfangsfläche 5 gehören, die in kraftschlüssiger Verbindung mit den Halteelement 4 steht.

### Bezugszeichenliste:

- 1: Spannungswellengetriebe
- 2: Circularspline
- 3: Flexspline
- 4: Halteelement
- 5: Außenumfangsfläche des Circularsplines 2
- 6: axiale Länge der Außenumfangsfläche 5
- 7: Teilkreisdurchmessers
- 8: Außenverzahnung
- 9: Innenverzahnung
- 10: Flextopfwandung
- 11: Flextopfboden
- 12: Wellengenerator
- 13: radialflexibles Wälzlager
- 14: Klemmbauteil
- 15: Flextopf
- 16: Durchgänge

## Patentansprüche

1. Getriebevorrichtung, die ein Spannungswellengetriebe (1), das einen Circularspline (2) und einen Flexspline (3) beinhaltet, sowie ein das Spannungswellengetriebe (1) an dem Circularspline (2) haltendes Halteelement (4) aufweist, **dadurch gekennzeichnet, dass** das Halteelement (4) den Circularspline (2), insbesondere wenigstens in Tangentialrichtung, ausschließlich kraftschlüssig an einer Außenumfangsfläche (5) des Circularsplines (2) hält und dass die Außenumfangsfläche (5) des Circularsplines (2) eine axiale Länge (6) aufweist, die größer ist als das 0,2-Fache des Teilkreisdurchmessers (7) einer Außenverzahnung (8) des Flexsplines (3).

2. Getriebevorrichtung nach Anspruch 1, **dadurch gekennzeichnet, dass**
a. zwischen dem Halteelement (4) und dem Circularspline (2) ein Klemmbauteil (14) angeordnet ist, oder dass
b. zwischen dem Halteelement (4) und dem Circularspline (2) ein Klemmbauteil (14) angeordnet ist, das als gewelltes und/oder elastisches und/oder zylinderförmig gebogenes Band, insbesondere Blechband, oder als geschlitzter Ring ausgebildet ist, und/oder dass
c. zwischen dem Halteelement (4) und dem Circularspline (2) ein Klemmbauteil (14) angeordnet ist, das aus einem Metall hergestellt ist oder ein Metall beinhaltet oder aus Stahl oder aus Federstahl hergestellt ist.

3. Getriebevorrichtung nach Anspruch 1 oder 2, **dadurch gekennzeichnet, dass**
a. die Außenumfangsfläche (5) des Circularsplines (2) zylinderförmig ausgebildet ist und/oder dass
b. die Außenumfangsfläche (5) des Circularsplines (2) frei von Vorsprüngen und Vertiefungen ist, und/oder dass
c. die Außenumfangsfläche (5) des Circularsplines (2) wenigstens in Tangentialrichtung frei von Vorsprüngen und Vertiefungen ist, und/oder dass
d. der Circularspline (2) keine Durchgänge für Befestigungsschrauben aufweist.

4. Getriebevorrichtung nach einem der Ansprüche 1 bis 3, **dadurch gekennzeichnet, dass** die kraftschlüssige Ankopplung des Circularsplines (2) an das Halteelement (4) derart ausgebildet ist, dass sie durchrutscht, bevor ein Bauteil des Spannungswellengetriebes (1) beschädigt wird.

5. Getriebevorrichtung nach einem der Ansprüche 1 bis 4, **dadurch gekennzeichnet, dass**
a. der Circularspline (2) aus einem Metall hergestellt ist oder ein Metall beinhaltet oder aus Stahl hergestellt ist, und/oder dass
b. das Halteelement (4) aus einem Metall hergestellt ist oder ein Metall beinhaltet oder aus Stahl hergestellt ist, und/oder dass
c. der Flexspline (3) als Flextopf (15) ausgebildet ist oder dass der Flexspline (3) als Flextopf (15) ausgebildet ist, wobei der Flextopfboden (11) einen Befestigungsflansch aufweist oder als Befestigungsflansch ausgebildet ist.

6. Getriebevorrichtung nach einem der Ansprüche 1 bis 5, **dadurch gekennzeichnet, dass**
a. der Circularspline (2) eine Innenverzahnung (9) und wenigstens einen axial über die Innenverzahnung (9) hervorstehenden Teil aufweist, oder dass
b. das Verhältnis der axialen Länge eines axial über die Innenverzahnung (9) hinausragenden Teils des Circularsplines (2) zu der axialen Länge einer Flextopfwandung (10) von einem Flextopfboden (11) bis zur Außenverzahnung (8) im Bereich von 1/10 bis 8/10 liegt oder dass
c. das Verhältnis der axialen Länge eines axial über den Bereich des Ineingriffs von Innenverzahnung (9) und Außenverzahnung (8) hinausragenden Teils des Circularsplines (2) zu der axialen Länge einer Flextopfwandung (10) von einem Flextopfboden (11) bis zum Bereich des Ineingriffs von Innenverzahnung (9) und Außenverzahnung (8) im Bereich von 1/10 bis 8/10 liegt.

7. Getriebevorrichtung nach einem der Ansprüche 1 bis 6, **dadurch gekennzeichnet, dass**
a. das Spannungswellengetriebe (1) einen Wellengenerator (12) aufweist, der als Antrieb fungiert, und dass der Flexspline (3) als Abtrieb fungiert, und/oder dass
b. die Zähneanzahl der Außenverzahnung (8) zwischen 152 und 168 Zähnen oder im Bereich von 160 bis 240 Zähnen liegt oder dass die Zähneanzahl der Außenverzahnung (8) genau 160 Zähne beträgt oder genau 240 Zähne beträgt, und/oder dass
c. die Innenverzahnung (9) des Circularsplines (2) genau zwei Zähne mehr aufweist, als die Außenverzahnung (8) des Flexsplines (3), und/oder dass
d. die Außenverzahnung (8) des Flexsplines (3) einen Teilkreisdurchmesser (7) im Bereich von 50 mm bis 53 mm oder im Bereich von 50,5 mm bis 51,5 mm oder im Bereich von 51,0 mm bis 51, 5 mm aufweist oder 51,2 mm ist, wenn die Untersetzung des Spannungswellengetriebes (1) i=80 beträgt oder 51,4 mm ist, wenn die Untersetzung des Spannungswellengetriebes (1) i=120 beträgt, und/oder
e. die Innenverzahnung (9) des Circularsplines (2) einen Teilkreisdurchmesser (7) im Bereich von 50 mm bis 53 mm oder im Bereich von 51,8 mm bis 52,3 mm aufweist.

8. Getriebevorrichtung nach einem der Ansprüche 1 bis 7, **dadurch gekennzeichnet, dass**
a. das Spannungswellengetriebe (1) eine Deflektion im Bereich von 0,3 mm bis 0,9 mm oder im Bereich von 0,4 mm bis 0,8 mm aufweist und/oder dass die Deflektion im Bereich von 0,5 % bis 1,5% des Teilkreisdurchmessers (7) der Außenverzahnung (8) des Flextopfes (15) liegt, oder dass
b. die Deflektion im Bereich von 0,6 mm bis 0,9 mm oder im Bereich von 0,7 mm bis 0,8 mm oder bei 0,73 mm liegt, wenn die Untersetzung des Spannungswellengetriebes (1) i=120 beträgt, oder dass
c. die Deflektion im Bereich von 0,3 mm bis 0,7 mm oder im Bereich von 0,4 mm bis 0,6 mm oder bei 0,5 mm liegt, wenn die Untersetzung des Spannungswellengetriebes (1) i=80 beträgt, und/oder dass
d. die Außenverzahnung (8) des Flexsplines (3) und/oder die Innenverzahnung (9) des Circularsplines (2) eine axiale Länge im Bereich von 7 mm bis 10 mm oder im Bereich von 8 bis 9 mm aufweist.

9. Getriebevorrichtung nach einem der Ansprüche 1 bis 8, **dadurch gekennzeichnet, dass** außer der Außenumfangsfläche (5) keine weitere Fläche zum kraftschlüssigen Anbinden des Circularsplines (2) an das Halteelement (4) oder ein anders Bauteil der Getriebevorrichtung vorhanden ist und/oder dass das Halteelement (4) den Circularspline (2) ausschließlich an der Außenumfangsfläche (5) des Circularsplines (2) hält.

10. Getriebevorrichtung nach einem der Ansprüche 1 bis 9, **dadurch gekennzeichnet, dass** der Circularspline (2) einstückig aus einem einzigen Stück Rohmaterial hergestellt ist und/oder dass der Circularspline (2) nicht aus mehreren Teilen zusammengesetzt ist.

11. Motorisiertes Gelenk für einen programmierbaren Bewegungsautomaten, das wenigstens eine Getriebevorrichtung nach einem der Ansprüche 1 bis 10 beinhaltet.

12. Motorisiertes Gelenk nach Anspruch 11, **dadurch gekennzeichnet, dass**
a. das motorisierte Gelenk einen Antriebsmotor aufweist, dem das Spannungswellengetriebe (1) triebtechnisch nachgeschaltet ist, und/oder dass
b. das Gelenk zwei relativ zueinander bewegliche Gehäuseteile aufweist, wobei das Halteelement (4) unbeweglich mit einem der Gehäuseteile verbunden ist oder Bestandteil eines der Gehäuseteile ist.

13. Motorisiertes Gelenk nach Anspruch 11 oder 12, **dadurch gekennzeichnet, dass**
a. das Gelenk dazu ausgebildet ist, zwei Träger derart zu verbinden, dass die Ebene in der sich einer der Träger bewegt und die Ebene in der sich der andere Träger bewegt stets parallel zueinander angeordnet sind, oder dass
b. das Gelenk als Scharniergelenk ausgebildet ist, oder dass
c. das Gelenk dazu ausgebildet ist, zwei Träger derart zu verbinden, dass die Ebene in der sich einer der Träger bewegt stets in einem festen Winkel, insbesondere senkrecht, zu dem anderen Träger angeordnet ist.

14. Programmierbarer Bewegungsautomat, der wenigstens eine Getriebevorrichtung nach einem der Ansprüche 1 bis 10 aufweist und/oder der wenigstens ein motorisiertes Gelenk nach einem der Ansprüche 11 bis 13 aufweist und/oder der zwei Träger aufweist, die mittels eines motorisierten Gelenks nach einem der Ansprüche 11 bis 13 relativ zueinander beweglich verbunden sind.

15. Programmierbarer Bewegungsautomat nach Anspruch 14, **dadurch gekennzeichnet, dass**
a. einer der Träger direkt oder indirekt drehfest mit dem Halteelement (4) verbunden ist oder das Halteelement (4) bildet, und/oder dass
b. die zwei mittels des motorisierten Gelenks beweglich verbundenen Träger Teile eines Roboterarmes sind, und/oder dass
c. das Gelenk zwei relativ zueinander bewegliche Gehäuseteile aufweist, wobei das Halteelement (4) unbeweglich mit einem der Gehäuseteile verbunden ist oder Bestandteil eines der Gehäuseteile ist, und/oder dass
d. der programmierbare Bewegungsautomat ein Industrieroboter ist.

## Claims

1. Gear mechanism device which has a strain wave gear mechanism (1), which comprises a circular spline (2) and a flex spline (3), and a holding element (4) which holds the strain wave gear mechanism (1) on the circular spline (2), **characterized in that** the holding element (4) holds the circular spline (2) on an outer circumferential surface (5) of the circular spline (2) in an exclusively non-positive manner, in particular at least in the tangential direction, and **in that** the outer circumferential surface (5) of the circular spline (2) has an axial length (6) which is greater than 0.2 times the pitch circle diameter (7) of an external spline system (8) of the flex spline (3).

2. Gear mechanism device according to Claim 1, **characterized in that**
a. a clamping component (14) is arranged between the holding element (4) and the circular spline (2), or in that
b. a clamping component (14) which is configured as a corrugated and/or elastic and/or cylindrically curved band, in particular sheet metal band, or as a slotted ring is arranged between the holding element (4) and the circular spline (2), and/or **in that**
c. a clamping component (14) which is produced from a metal or comprises a metal or is produced from steel or from spring steel is arranged between the holding element (4) and the circular spline (2).

3. Gear mechanism device according to Claim 1 or 2, **characterized in that**
a. the outer circumferential surface (5) of the circular spline (2) is of cylindrical configuration, and/or **in that**
b. the outer circumferential surface (5) of the circular spline (2) is free from projections and depressions, and/or **in that**
c. the outer circumferential surface (5) of the spline (2) is free from projections and depressions at least in the tangential direction, and/or **in that**
d. the circular spline (2) does not have any passages for fastening screws.

4. Gear mechanism device according to one of Claims 1 to 3, **characterized in that** the non-positive coupling of the circular spline (2) to the holding element (4) is configured in such a way that it slips before a component of the strain wave gear mechanism (1) is damaged.

5. Gear mechanism device according to one of Claims 1 to 4, **characterized in that**
a. the circular spline (2) is produced from a metal or comprises a metal or is produced from steel, and/or in that
b. the holding element (4) is produced from a metal or comprises a metal or is produced from steel, and/or in that
c. the flex spline (3) is configured as a flex pot (15), or **in that** the flex spline (3) is configured as a flex pot (15), the flex pot bottom (11) having a fastening flange or being configured as a fastening flange.

6. Gear mechanism device according to one of Claims 1 to 5, **characterized in that**
a. the circular spline (2) has an internal spline system (9) and at least one part which projects axially beyond the internal spline system (9), or in that
b. the ratio of the axial length of a part of the circular spline (2) which projects beyond the internal spline system (9) to the axial length of a flex pot wall (10) from a flex pot bottom (11) as far as the external spline system (8) lies in the range from 1/10 to 8/10, or **in that**
c. the ratio of the axial length of a part of the circular spline (2) which projects axially beyond the region of the engagement of the internal spline system (9) and the external spline system (8) to the axial length of a flex pot wall (10) from a flex pot bottom (11) as far as the region of the engagement of the internal spline system (9) and the external spline system (8) lies in the range from 1/10 to 8/10.

7. Gear mechanism device according to one of Claims 1 to 6, **characterized in that**
a. the strain wave gear mechanism (1) has a wave generator (12) which acts as a drive, and **in that** the flex spline (3) acts as an output, and/or **in that**
b. the number of teeth of the external spline system (8) lies between 152 and 168 teeth or in the range from 160 to 240 teeth, or **in that** the number of teeth of the external spline system (8) is precisely 160 teeth or is precisely 240 teeth, and/or **in that**
c. the internal spline system (9) of the circular spline (2) has precisely two more teeth than the external spline system (8) of the flex spline (3), and/or **in that**
d. the external spline system (8) of the flex spline (3) has a pitch circle diameter (7) in the range from 50 mm to 53 mm or in the range from 50.5 mm to 51.5 mm or in the range from 51.0 mm to 51.5 mm or is 51.2 mm when the step-down transmission ratio of the strain wave gear mechanism (1) is i = 80, or 51.4 mm when the step-down transmission ratio of the strain wave gear mechanism (1) is i = 120, and/or
e. the internal spline system (9) of the circular spline (2) has a pitch circle diameter (7) in the range from 50 mm to 53 mm or in the range from 51.8 mm to 52.3 mm.

8. Gear mechanism device according to one of Claims 1 to 7, **characterized in that**
a. the strain wave gear mechanism (1) has a deflection in the range from 0.3 mm to 0.9 mm or in the range from 0.4 mm to 0.8 mm, and/or **in that** the deflection lies in the range from 0.5% to 1.5% of the pitch circle diameter (7) of the external spline system (8) of the flex pot (15), or **in that**
b. the deflection lies in the range from 0.6 mm to 0.9 mm or in the range from 0.7 mm to 0.8 mm or lies at 0.73 mm when the step-down transmission ratio of the strain wave gear mechanism (1) is i = 120, or **in that**
c. the deflection lies in the range from 0.3 mm to 0.7 mm or in the range from 0.4 mm to 0.6 mm or lies at 0.5 mm when the step-down transmission ratio of the strain wave gear mechanism (1) is i = 80, and/or **in that**
d. the external spline system (8) of the flex spline (3) and/or the internal spline system (9) of the circular spline (2) have/has an axial length in the range from 7 mm to 10 mm or in the range from 8 to 9 mm.

9. Gear mechanism device according to one of Claims 1 to 8, **characterized in that**, apart from the outer circumferential surface (5), there is no further surface for the non-positive attachment of the circular spline (2) to the holding element (4) or any other component of the gear mechanism device, and/or **in that** the holding element (4) holds the circular spline (2) exclusively on the outer circumferential surface (5) of the circular spline (2).

10. Gear mechanism device according to one of Claims 1 to 9, **characterized in that** the circular spline (2) is produced in one piece from a single piece of tubular material, and/or **in that** the circular spline (2) is not assembled from a plurality of parts.

11. Motorized joint for a programmable automatic moving device which comprises at least one gear mechanism device according to one of Claims 1 to 10.

12. Motorized joint according to Claim 11, **characterized in that**
a. the motorized joint has a drive motor, to which the strain wave gear mechanism (1) is connected in drive terms, and/or **in that**
b. the joint has two housing parts which can be moved relative to one another, the holding element (4) being connected immovably to one of the housing parts or being a constituent part of one of the housing parts.

13. Motorized joint according to Claim 11 or 12, **characterized in that**
a. the joint is configured to connect two carriers in such a way that the plane, in which one of the carriers moves, and the plane, in which the other carrier moves, are always arranged parallel to one another, or **in that**
b. the joint is configured as a hinged joint, or **in that**
c. the joint is configured to connect two carriers in such a way that the plane, in which one of the carriers moves, is always arranged at a fixed angle, in particular perpendicularly, with respect to the other carrier.

14. Programmable automatic moving device which has at least one gear mechanism device according to one of Claims 1 to 10 and/or which has at least one motorized joint according to one of Claims 11 to 13 and/or which has two carriers which are connected movably relative to one another by means of a motorized joint according to one of Claims 11 to 13.

15. Programmable automatic moving device according to Claim 14, **characterized in that**
a. one of the carriers is directly or indirectly connected fixedly to the holding element (4) for conjoint rotation or forms the holding element (4), and/or **in that**
b. the two carriers which are connected movably by means of the motorized joint are parts of a robot arm, and/or **in that**
c. the joint has two housing parts which can be moved relative to one another, the holding element (4) being connected immovably to one of the housing parts or being a constituent part of one of the housing parts, and/or **in that**
d. the programmable automatic moving device is an industrial robot.

## Revendications

1. Dispositif de transmission, qui présente un engrenage à onde de déformation (1), qui contient un Circularspline (2) et un Flexspline (3), ainsi qu'un élément de maintien (4) maintenant l'engrenage à onde de déformation (1) sur le Circularspline (2), **caractérisé en ce que** l'élément de maintien (4) maintient le Circularspline (2), notamment au moins dans la direction tangentielle, exclusivement par adhérence sur une surface périphérique extérieure (5) du Circularspline (2) et **en ce que** la surface périphérique extérieure (5) du Circularspline (2) présente une longueur axiale (6) qui est supérieure à 0,2 fois le diamètre de cercle primitif (7) d'une denture extérieure (8) du Flexspline (3).

2. Dispositif de transmission selon la revendication 1, **caractérisé en ce que**
a. un composant de serrage (14) est agencé entre l'élément de maintien (4) et le Circularspline (2), ou en ce que
b. un composant de serrage (14) est agencé entre l'élément de maintien (4) et le Circularspline (2), lequel est réalisé sous forme de bande ondulée et/ou élastique et/ou pliée en forme de cylindre, notamment de bande de tôle, ou sous forme d'anneau fendu, et/ou **en ce que**
c. un élément de serrage (14) est agencé entre l'élément de maintien (4) et le Circularspline (2), lequel est fabriqué en un métal ou contient un métal ou est fabriqué en acier ou en acier à ressort.

3. Dispositif de transmission selon la revendication 1 ou 2, **caractérisé en ce que**
a. la surface périphérique extérieure (5) du Circularspline (2) est réalisée sous forme cylindrique, et/ou **en ce que**
b. la surface périphérique extérieure (5) du Circularspline (2) est exempte de saillies et de creux, et/ou **en ce que**
c. la surface périphérique extérieure (5) du Circularspline (2) est exempte de saillies et de creux au moins dans la direction tangentielle, et/ou **en ce que**
d. le Circularspline (2) ne présente pas de passages pour des vis de fixation.

4. Dispositif de transmission selon l'une quelconque des revendications 1 à 3, **caractérisé en ce que** l'accouplement par adhérence du Circularspline (2) à l'élément de maintien (4) est réalisé de telle sorte qu'il glisse avant qu'un composant de l'engrenage à onde de déformation (1) ne soit endommagé.

5. Dispositif de transmission selon l'une quelconque des revendications 1 à 4, **caractérisé en ce que**
a. le Circularspline (2) est fabriqué en un métal ou contient un métal ou est fabriqué en acier, et/ou **en ce que**
b. l'élément de maintien (4) est fabriqué en un métal ou contient un métal ou est fabriqué en acier, et/ou **en ce que**
c. le Flexspline (3) est réalisé sous forme de pot flexible (15) ou **en ce que** le Flexspline (3) est réalisé sous forme de pot flexible (15), le fond de pot flexible (11) présentant une bride de fixation ou étant réalisé sous forme de bride de fixation.

6. Dispositif de transmission selon l'une quelconque des revendications 1 à 5, **caractérisé en ce que**
a. le Circularspline (2) présente une denture intérieure (9) et au moins une partie faisant saillie axialement au-delà de la denture intérieure (9), ou **en ce que**
b. le rapport entre la longueur axiale d'une partie du Circularspline (2) faisant saillie axialement au-delà de la denture intérieure (9) et la longueur axiale d'une paroi de pot flexible (10) depuis un fond de pot flexible (11) jusqu'à la denture extérieure (8) se situe dans la plage de 1/10 à 8/10, ou **en ce que**
c. le rapport entre la longueur axiale d'une partie du Circularspline (2) faisant saillie axialement au-delà de la zone d'engrènement de la denture intérieure (9) et de la denture extérieure (8) et la longueur axiale d'une paroi de pot flexible (10) depuis un fond de pot flexible (11) jusqu'à la zone d'engrènement de la denture intérieure (9) et de la denture extérieure (8) se situe dans la plage de 1/10 à 8/10.

7. Dispositif de transmission selon l'une quelconque des revendications 1 à 6, **caractérisé en ce que**
a. l'engrenage à onde de déformation (1) présente un générateur d'onde (12) qui sert d'entraînement, et **en ce que** le Flexspline (3) sert de sortie, et/ou **en ce que**
b. le nombre de dents de la denture extérieure (8) se situe entre 152 et 168 dents ou dans la plage de 160 à 240 dents, ou **en ce que** le nombre de dents de la denture extérieure (8) est exactement de 160 dents ou est exactement de 240 dents, et/ou **en ce que**
c. la denture intérieure (9) du Circularspline (2) présente exactement deux dents de plus que la denture extérieure (8) du Flexspline (3), et/ou **en ce que**
d. la denture extérieure (8) du Flexspline (3) présente un diamètre de cercle primitif (7) dans la plage de 50 mm à 53 mm ou dans la plage de 50,5 mm à 51,5 mm ou dans la plage de 51,0 mm à 51,5 mm ou est de 51,2 mm lorsque la réduction de l'engrenage à onde de déformation (1) est i = 80 ou est de 51,4 mm lorsque la réduction de l'engrenage à onde de déformation (1) est i = 120, et/ou
e. la denture intérieure (9) du Circularspline (2) présente un diamètre de cercle primitif (7) dans la plage de 50 mm à 53 mm ou dans la plage de 51,8 mm à 52,3 mm.

8. Dispositif de transmission selon l'une quelconque des revendications 1 à 7, **caractérisé en ce que**
a. l'engrenage à onde de déformation (1) présente une déflexion dans la plage de 0,3 mm à 0,9 mm ou dans la plage de 0,4 mm à 0,8 mm et/ou **en ce que** la déflexion se situe dans la plage de 0,5 % à 1,5 % du diamètre de cercle primitif (7) de la denture extérieure (8) du pot flexible (15), ou **en ce que**
b. la déflexion se situe dans la plage de 0,6 mm à 0,9 mm ou dans la plage de 0,7 mm à 0,8 mm ou à 0,73 mm lorsque la réduction de l'engrenage à onde de déformation (1) est i = 120, ou **en ce que**
c. la déflexion se situe dans la plage de 0,3 mm à 0,7 mm ou dans la plage de 0,4 mm à 0,6 mm ou à 0,5 mm lorsque la réduction de l'engrenage à onde de déformation (1) est i = 80, et/ou **en ce que**
d. la denture extérieure (8) du Flexspline (3) et/ou la denture intérieure (9) du Circularspline (2) présente une longueur axiale dans la plage de 7 mm à 10 mm ou dans la plage de 8 à 9 mm.

9. Dispositif de transmission selon l'une quelconque des revendications 1 à 8, **caractérisé en ce qu'**il n'y a pas d'autre surface que la surface périphérique extérieure (5) pour relier par adhérence le Circularspline (2) à l'élément de maintien (4) ou à un autre composant du dispositif de transmission et/ou **en ce que** l'élément de maintien (4) maintient le Circularspline (2) exclusivement sur la surface périphérique extérieure (5) du Circularspline (2).

10. Dispositif de transmission selon l'une quelconque des revendications 1 à 9, **caractérisé en ce que** le Circularspline (2) est fabriqué d'une seule pièce à partir d'une pièce unique de matière première et/ou **en ce que** le Circularspline (2) n'est pas assemblé à partir de plusieurs parties.

11. Articulation motorisée pour automate de déplacement programmable, qui contient au moins un dispositif de transmission selon l'une quelconque des revendications 1 à 10.

12. Articulation motorisée selon la revendication 11, **caractérisée en ce que**
a. l'articulation motorisée présente un moteur d'entraînement en aval duquel l'engrenage à onde de déformation (1) est monté en termes d'entraînement, et/ou en ce que
b. l'articulation présente deux parties de boîtier mobiles l'une par rapport à l'autre, l'élément de maintien (4) étant relié de manière immobile à l'une des parties de boîtier ou faisant partie de l'une des parties de boîtier.

13. Articulation motorisée selon la revendication 11 ou 12, **caractérisée en ce que**
a. l'articulation est réalisée pour relier deux supports de telle sorte que le plan dans lequel se déplace l'un des supports et le plan dans lequel se déplace l'autre support sont toujours agencés parallèlement l'un à l'autre, ou **en ce que**
b. l'articulation est réalisée sous forme d'articulation à charnière, ou **en ce que**
c. l'articulation est réalisée pour relier deux supports de telle sorte que le plan dans lequel se déplace l'un des supports est toujours agencé selon un angle fixe, notamment perpendiculairement, par rapport à l'autre support.

14. Automate de déplacement programmable, qui présente au moins un dispositif de transmission selon l'une quelconque des revendications 1 à 10 et/ou qui présente au moins une articulation motorisée selon l'une quelconque des revendications 11 à 13 et/ou qui présente deux supports reliés entre eux de manière mobile l'un par rapport à l'autre au moyen d'une articulation motorisée selon l'une quelconque des revendications 11 à 13.

15. Automate de déplacement programmable selon la revendication 14, **caractérisé en ce que**
a. l'un des supports est relié de manière solidaire en rotation, directement ou indirectement, à l'élément de maintien (4) ou forme l'élément de maintien (4), et/ou en ce que
b. les deux supports reliés de manière mobile au moyen de l'articulation motorisée sont des parties d'un bras de robot, et/ou **en ce que**
c. l'articulation présente deux parties de boîtier mobiles l'une par rapport à l'autre, l'élément de maintien (4) étant relié de manière immobile à l'une des parties de boîtier ou faisant partie de l'une des parties de boîtier, et/ou **en ce que**
d. l'automate de déplacement programmable est un robot industriel.
